# EUROPÄISCHE PATENTSCHRIFT

(11) **EP 4 336 431 B1**
(45) Veröffentlichungstag und Bekanntmachung des Hinweises auf die Patenterteilung: **23.04.2025**
(21) Anmeldenummer: 22194679.1
(22) Anmeldetag: 08.09.2022
(51) Int. Cl.: G06Q 10/0875

(54) **VORRICHTUNG ZUR BEHANDLUNG WENIGSTENS EINES GEFAHRGUTES AN ZUMINDEST EINEM LAGERORT ZUR AUFBEWAHRUNG EINER ODER MEHRERER GEFAHRGÜTER**
DEVICE FOR TREATING AT LEAST ONE HAZARDOUS MATERIAL AT AT LEAST ONE STORAGE LOCATION FOR STORING ONE OR MORE HAZARDOUS MATERIALS
DISPOSITIF DE TRAITEMENT D'AU MOINS UN PRODUIT DANGEREUX AU MOINS UN EMPLACEMENT DE STOCKAGE POUR STOCKER UN OU PLUSIEURS PRODUITS DANGEREUX

(43) Veröffentlichungstag der Anmeldung: 13.03.2024
(73) Patentinhaber: Düperthal Sicherheitstechnik GmbH & Co.KG, 63791 Karlstein (DE)
(72) Erfinder: BACKHAUS, Frank, 32051 Herford (DE)
(74) Vertreter: Andrejewski - Honke Patent- und Rechtsanwälte Partnerschaft mbB

(56) Entgegenhaltungen:
- EP-A1- 3 816 073
- EP-A2- 2 974 831
- EP-B1- 3 885 693
- WO-A1-2019/112844
- CN-A- 111 063 064
- US-A1- 2013 144 428
- US-A1- 2015 115 029
- US-A1- 2017 262 797
- US-A1- 2018 365 642
- US-A1- 2019 005 569
- US-A1- 2019 122 292
- IAV: "automotion 02/2021", 6 July 2021 (2021-07-06), XP093154880, Retrieved from the Internet <URL:https://www.iav.com/app/uploads/2021/07/210705_IAV_automotion_2_2021_WEB.pdf>
- VDA: "Technische Quarantäneflächen für beschädigte Fahrzeuge mit Lithium-Ionen-Batterien", 16 August 2022 (2022-08-16), XP093154866, Retrieved from the Internet <URL:https://www.vda.de/dam/jcr:6ac77206-500b-4ce6-960f-40edd8618d91/Standards_Quarantäneflächen_final.pdf>
- JÜRGEN KUNKELMANN: "Untersuchung des Brandverhaltens von Lithium-Ionen-und Lithium-Metall-Batterien in verschiedenen Anwendungen und Ableitung einsatztaktischer Empfehlungen", STÄNDIGE KONFERENZ DER INNENMINISTER UND -SENATOREN DER LÄNDER, ARBEITSKREIS V, AUSSCHUSS FÜR FEUERWEHRANGELEGENHEITEN, KATASTROPHENSCHUTZ UND ZIVILE VERTEIDIGUNG, 1 December 2016 (2016-12-01), XP093154860, Retrieved from the Internet <URL:https://www.ffb.kit.edu/download/IMK%20Ber.%20Nr.%20175%20Kunkelmann%20Lithium-Ionen-%20und%20Lithium-Metall-Batterien%20-%20Ueberarbeitung%20-%2003.02.2017%20-%202.pdf>

## Beschreibung

Die Erfindung betrifft die Verwendung einer Lagerortverwaltungsvorrichtung mit mehreren Lagerorten zur jeweiligen Aufbewahrung einer oder mehrerer Gefahrgüter, wobei der jeweilige Lagerort als Sicherheitsschrank ausgebildet ist. Die Steuereinheit kann dabei dem jeweiligen Lagerort zugeordnet sein. Genauso gut ist eine gleichsam zentrale Steuereinheit für mehrere Lagerorte denkbar, welche drahtlos oder drahtgebunden mit dem entsprechenden Lagerort kommuniziert. Bei dem Lagerort zur Aufbewahrung einer oder mehrerer Gefahrgüter handelt es sich um einen abgegrenzten örtlichen Bereich, innerhalb dessen die Gefahrgüter aufbewahrt werden können. Die Abgrenzung kann dabei durch entsprechende mechanische Abgrenzungsmaßnahmen wie beispielsweise Zäune, Mauern etc. erfolgen. Grundsätzlich kann der Lagerort auch beispielsweise elektronisch derart definiert werden, dass eine Überwachung des Lagerortes vor dem Zugriff Unbefugter sichergestellt ist. Im einfachsten Fall handelt es sich bei dem Lagerort um einen Sicherheitsschrank bzw. Gefahrstoffschrank, wie er im Zusammenhang mit der gattungsbildenden Lehre nach der EP 3 885 693 A1 beschrieben wird. Solche Sicherheitsschränke dienen typischerweise zur Lagerung von Chemikalien, Feststoffen, Gasen, Batterien etc. als Gefahrgüter, die beispielsweise vor dem Zugriff Unbefugter geschützt werden müssen oder auch vor etwaigen Hitzequellen.

Zu diesem Zweck ist eine Steuereinheit vorgesehen, mit deren Hilfe sowohl das jeweilige Gefahrgut als auch der zugehörige Lagerort identifiziert werden können. Die Identifizierung des Gefahrgutes wird bei der bekannten Lehre beispielhaft über ein produktspezifisches Identifikationsmittel vorgenommen, bei dem es sich um einen QR-Code handeln kann. Auch der betreffende Lagerort respektive der Sicherheitsschrank kann mit einem solchen schrankspezifischen Identifikationsmittel in Gestalt eines QR-Codes ausgerüstet werden.

Auf diese Weise ist die Steuereinheit sowohl über das betreffende Gefahrgut als auch den zugehörigen Lagerort informiert. Sofern ein Bediener das Gefahrgut aus dem betreffenden Lagerort entnimmt, setzt dies im Allgemeinen eine Berechtigungsprüfung des Bedieners oder Benutzers voraus. Hierzu muss der Bediener bzw. Benutzer über einen Zugangscode verfügen, der an die Steuereinheit übermittelt wird. Sofern die Steuereinheit die Berechtigung des Benutzers bejaht, kann das identifizierte Gefahrgut am zugehörigen Lagerort entnommen und beispielsweise verbraucht werden. Nach der Benutzung des Gefahrgutes sollte dieses entsprechend zum zugehörigen Lagerort zurückgebracht werden. Das wird oftmals nicht oder nicht zuverlässig erledigt und stößt in der Praxis beispielsweise dann auf Probleme, wenn Gefahrgüter gleicher Art im Umlauf sind. So ist es denkbar, dass es sich bei dem Gefahrgut um eine Acetonflasche handelt, die aus einem bestimmten Sicherheitsschrank entnommen wurde.

Wenn dies beispielsweise in einem weitverzweigten Labor erfolgt und mehrere Acetonflaschen im Umlauf sind, kann eine einwandfreie Zuordnung zum Lagerort in der Regel nicht mehr sichergestellt werden. Gleiches gilt für den Fall, dass am Lagerort beispielsweise mehrere Acetonflaschen aufbewahrt werden. Die einwandfreie Identifizierung des Gefahrgutes und des Lageortes reicht also unter Umständen nicht aus, um eine zielgenaue und reproduzierbare Lagerhaltung zur Verfügung zu stellen.

Eine solche zielgenaue Zuordnung des Gefahrgutes und des zugehörigen Lageortes sowie des richtigen Lagerplatzes des Gefahrgutes ist jedoch dann besonders wichtig, wenn beispielsweise Verbrauchswerte erfasst werden sollen, wie dies die gattungsbildende Lehre nach der EP 3 885 693 A1 lehrt. Denn die Verbrauchswerte korrespondieren beispielsweise zu Massenabnahmen bei Flüssigkeiten, die über am betreffenden Lagerort bzw. im Innern des an dieser Stelle realisierten Sicherheitsschrankes angeordnete Wägezellen erfasst werden. Wenn jedoch die "falsche" Acetonflasche im Beispielfall an den Lagerort zurückgestellt wird, führt dies zu falschen Verbrauchswerten und unter Umständen nicht erforderlichen oder nicht vorgenommenen Nachbestellungen. Außerdem können hieraus eventuell Sicherheitsrisiken resultieren, wenn im Beispielfall die Menge an Aceton im zugehörigen Sicherheitsschrank zu groß ist bzw. einen vorgegebenen Schwellwert überschreitet.

Zwar beschäftigt sich der weitere Stand der Technik nach der EP 3 832 343 A1 bereits mit einem Lagerverwaltungssystem, welches über Sensoreinrichtungen den Bestand an Lagergut erfassen und verwalten kann. Eine zielgenaue Rückführung des Gefahrgutes an seinen angestammten und zuvor eingenommenen Platz des zugehörigen Lagerortes ist hiermit ebenfalls nicht möglich.

Der nächstkommende Stand der Technik nach der US 2018/0365642 A1 befasst sich mit einem System und einem Verfahren zur Behandlung und Aufnahme von Paketen. In diesem Zusammenhang werden die Pakete auf einzelnen Lagerböden eines Regals aufgenommen. Mithilfe eines zusätzlichen Displays kann Ihre genaue Position durch beispielsweise eine Pfeildarstellung wiedergegeben werden. Die zuvor identifizierten Probleme sind hierdurch nicht maßgeblich beeinflusst worden, so dass die Erfindung insgesamt Abhilfe schaffen will.

Der Erfindung liegt das technische Problem zugrunde, eine derartige Verwendung so weiter zu entwickeln, dass das Gefahrgut am zugehörigen Lagerort einwandfrei im Hinblick auf seinen Platz identifiziert werden kann, so dass eine zielgenaue Entnahme und Rückführung des Gefahrgutes mit einfachen Mitteln möglich ist.

Zur Lösung dieser technischen Problemstellung schlägt die Erfindung ein Verfahren nach Anspruch 1 vor.

Im Rahmen der Erfindung wird also die grundsätzlich im Stand der Technik bereits vorgesehene Anzeigeeinheit in spezieller Art und Weise genutzt und weiterentwickelt. Tatsächlich arbeitet der gattungsbildende Stand der Technik nach der EP 3 885 693 A1 so, dass als Anzeigeeinheit am Lagerort im Endeffekt eine Zugangskontrolleinheit fungiert. Eine solche Zugangskontrolleinheit ist im Rahmen der Erfindung ebenfalls vorgesehen, um die Berechtigung des Benutzers zu überprüfen.

Erfindungsgemäß wird die Anzeigeeinheit allerdings dazu eingesetzt, dass mit ihrer Hilfe die örtliche Position des Gefahrgutes am Lagerort für einen Bediener angezeigt wird. D. h., mithilfe der Anzeigeeinheit kann der Lagerort dahingehend weiter detailliert bzw. unterteilt werden, dass nicht nur das Gefahrgut mit dem Lagerort identifiziert und in der Steuereinheit verknüpft wird, sondern zusätzlich der Platz des Gefahrgutes am Lagerort nicht nur bekannt ist, sondern mithilfe der Anzeigeeinheit auch dem Bediener kenntlich gemacht und angezeigt wird.

Zu diesem Zweck kann die Anzeigeeinheit beispielsweise als wenigstens ein Display ausgebildet sein oder ein solches aufweisen. Meistens wird mit mehreren Displays verteilt über den Lagerort gearbeitet, um einzelne Plätze für die jeweiligen am Lagerort aufbewahrten Gefahrgüter voneinander unterscheiden zu können und einen Bediener entsprechend zu unterrichten.

Bei den fraglichen Displays kann es sich ganz generell um sogenannte elektronische Etiketten handeln, die im Rahmen der Erfindung zur Anzeige der jeweils vorhandenen Gefahrgüter ausgebildet sind. Alternativ oder zusätzlich kann mithilfe des Displays bzw. der realisierten elektronischen Etiketten auch ein Abbild des Lageortes angezeigt und dem Bediener zur Kenntnis gebracht werden.

Zu diesem Zweck ist es denkbar, dass das Display eine zusätzliche Anzeigefunktion zur örtlichen Positionsangabe des Gefahrgutes aufweist. Die örtliche Positionsangabe korrespondiert dabei zum Platz des Gefahrgutes innerhalb des Lageortes. Dabei kann die zusätzliche Anzeigefunktion als beispielsweise Hintergrundfarbe, Zusatzfeld etc. ausgebildet sein.

Handelt es sich bei dem Lagerort beispielhaft um einen Sicherheitsschrank mit mehreren Schubladen zur Aufnahme der Gefahrgüter, so kann jede einzelne Schublade mit einem Display als elektronisches Etikett ausgerüstet werden. Folgerichtig wird über das Display angegeben, welche einzelnen Gefahrgüter im Beispielfall auf der Schublade angeordnet sind, beispielsweise eine Acetonflasche und eine Reinigungsbenzinflasche. Im Rahmen der Erfindung ist nun das fragliche Display bzw. elektronische Etikett mit einer zusätzlichen Anzeigefunktion ausgerüstet, die beispielsweise als Hintergrundfarbe ausgelegt sein kann.

Auf den Beispielfall übertragen bedeutet dies, dass bei einer Rückgabe der Reinigungsbenzinflasche das betreffende Display an der zugehörigen Schublade grün unterlegt wird, um anzuzeigen, dass sich die Reinigungsbenzinflasche vorher auf eben dieser Schublade befunden hat. Selbstverständlich kann anstelle mit der Hintergrundfarbe als zusätzliche Anzeigefunktion auch ein Zusatzfeld im Display derart definiert werden, dass ein Bediener durch einen Hinweis "Reinigungsbenzinflasche hier" mit einem Pfeil auf die betreffende Schublade hingewiesen wird, welche den ursprünglichen Platz für die betreffende Reinigungsbenzinflasche definiert und vorgibt.

Alternativ oder zusätzlich ist es auch denkbar, dass die Anzeigeeinheit zumindest ein Leuchtmittel aufweist oder als solches ausgebildet ist. In diesem Fall ist vorgesehen, die betreffende Schublade im Beispielfall zur Aufnahme der Reinigungsbenzinflasche mithilfe der Anzeigeeinheit bzw. des Leuchtmittels gezielt zu beleuchten, um den Bediener auf den angestammten Platz für die Reinigungsbezinflasche im Beispielfall hinzuweisen. Das kann durch ein beispielsweise oberhalb der Schublade angebrachtes Leuchtmittel, eine Mehrzahl an Leuchtmitteln an der Decke oder sonst wie geschehen. Grundsätzlich kann auch das Display mit einem Pfeil auf den angestammten Platz der Reinigungsbenzinflasche im Beispielfall hinweisen. Dabei versteht es sich, dass das Leuchtmittel alleine für diese Hinweisfunktion im Sinne einer Pfeildarstellung, einer örtlich begrenzten Beleuchtung etc. geeignet ist. D. h., die Vorgehensweise, wonach das Leuchtmittel zur Beleuchtung des Gefahrgutes an der örtlichen Position eingerichtet ist, stellt nur eine von vielen Möglichkeiten dar, um den angestammten Platz des Gefahrgutes am Lagerort für den Bediener optisch kenntlich zu machen.

Im Rahmen der Erfindung wird dabei so vorgegangen dass zusätzlich zur stationären Steuereinheit, mit deren Hilfe zumindest das Gefahrgut und sein zugehöriger Lagerort identifiziert werden, wenigstens eine mobile Steuereinheit zur Mitnahme seitens des Bedieners vorgesehen ist. Bei dieser mobilen Steuereinheit handelt es sich vorteilhaft um ein Mobiltelefon, ein Tablet etc., jedenfalls eine Steuereinheit, die in der Regel drahtlos Daten mit der stationären Steuereinheit austauscht und auch austauschen kann, um zumindest das Gefahrgut und seinen zugehörigen Lagerort zu identifizieren. In diesem einfachsten Fall wird also ein Bediener im zuvor bereits diskutierten Beispielfall darüber informiert, dass die Reinigungsbenzinflasche in den "Sicherheitsschrank 2" wieder zurückgebracht werden muss. Selbstverständlich können hier auch noch weitere Ortsinformationen zum Lagerort und damit dem Sicherheitsschrank 2 im Beispielfall hinterlegt und dem Bediener zur Kenntnis gebracht werden, beispielsweise den genauen Ort in einem Gebäude, das Gebäude etc.

Nach weiterer erfindungsgemäßer Ausgestaltung ist die Auslegung so getroffen, dass die mobile Steuereinheit darüber hinaus Ortsinformationen auswerten und den Bediener zur örtlichen Position bzw. dem zugehörigen Platz des Gefahrgutes am Lagerort führt. In diesem Fall kann die mobile Steuereinheit beispielsweise anhand von GPS- (Global Positioning System) Daten seine und damit die Position des Bedieners auswerten und einen "Routenvorschlag" dem Bediener unterbreiten, damit dieser das betreffende Gefahrgut zielgenau an seinem angestammten Platz am zugehörigen Lagerort unterbringen kann. Anstelle von GPS-Daten ist es natürlich auch denkbar, dass die mobile Steuereinheit Ortsinformationen von dem Lagerort bzw. den mehreren Lagerorten zugeordneten Sendern im Sinne einer Triangulation auswertet. Selbstverständlich können diese Informationen auch miteinander kombiniert werden.

Darüber hinaus hat es sich bewährt, wenn der Lagerort mit einer Erfasseinrichtung für das Gefahrgut und/oder einer Erfasseinrichtung für den zutrittswilligen Bediener ausgerüstet ist. Bei der Erfasseinrichtung für den zutrittswilligen Bediener kann es sich um die zuvor bereits beschriebene Zugangskontrolleinheit handeln. An der Zugangskontrolleinheit muss sich der Bediener folglich beispielsweise über einen Code identifizieren, um überhaupt Zugang zum Lagerort zu erhalten. Die Erfasseinrichtung für das Gefahrgut am Lagerort oder sonst wo ist im einfachsten Fall beispielsweise als QR-Code-Leser ausgelegt, wenn das jeweilige Gefahrgut durch einen aufgeklebten QR-Code identifiziert wird. Selbstverständlich sind auch andere Identifikationsmittel am Gefahrgut, beispielsweise ein Transponder, denkbar, die dann eine entsprechend angepasste Erfasseinrichtung erfordern.

Der bereits angesprochene QR-Code-Leser bzw. die Erfasseinrichtung kann dabei in die mobile Steuereinheit für den Bediener integriert werden, sodass der Bediener nach Passieren der Zugangskontrolleinheit am Eingang des Lagerortes mithilfe seiner mobilen Steuereinheit unschwer das gewünschte Gefahrgut erfassen kann. Ebenfalls ist die Erfasseinrichtung zur Identifizierung des Lageortes einsetzbar. Das kann erneut und im einfachsten Fall durch einen beispielsweise außenseitig am Sicherheitsschrank als Lagerort aufgeklebten oder angeklebten weiteren QR-Code erfolgen.

D. h., der mit der mobilen Steuereinheit ausgerüstete Bediener ist nicht nur in der Lage, den Lagerort mit seiner Erfasseinrichtung zu identifizieren, sondern nach seinem berechtigten Zugang zum Lagerort auch das jeweils gewünschte und in der Regel entnommene Gefahrgut. Beide Daten werden miteinander in der mobilen Steuereinheit verknüpft und an die ortsfeste Steuereinheit übermittelt, die folglich davon unterrichtet wird, dass ein bestimmter Bediener ein festgelegtes Gefahrgut von einem bestimmten Lagerort entnommen hat.

In diesem Zusammenhang kann die mobile Steuereinheit gleichsam eine doppelte Funktion übernehmen. Wie bereits erläutert, kann die mobile Steuereinheit als Anzeigeeinheit ausgebildet sein bzw. als solche fungieren respektive einen Bestandteil der Anzeigeeinheit darstellen. Darüber hinaus und erfindungsgemäß kann die mobile Steuereinheit aber auch einen Bestandteil der Erfasseinrichtung für das Gefahrgut und/oder den zutrittswilligen Bediener und/oder den Lagerort zusätzlich definieren. Der mobilen Steuereinheit kommt in diesem Fall also eine doppelte Funktionalität zu, einerseits als Anzeigeeinheit und andererseits als Erfasseinrichtung bzw. als jeweiliger Bestandteil hiervon.

Wenn man dann noch berücksichtigt, dass die einzelnen Gefahrgüter am Lagerort hinsichtlich ihres jeweils eingenommenen Platzes bzw. der definierten örtlichen Position festgelegt und bekannt sind, kann im Anschluss an die Entnahme des betreffenden Gefahrgutes sichergestellt werden, dass dieses nach einer Benutzung bzw. einem entsprechenden Verbrauch auch wieder an seinen angestammten Platz zurückfindet. Die Identifizierung des Platzes des Gefahrgutes am Lagerort kann beispielsweise mithilfe einer Wägeeinrichtung bzw. Wägezellen als Erfasseinrichtung vorgenommen werden, die üblicherweise zur Verbrauchsmessung eingesetzt wird, wie dies der gattungsbildende Stand der Technik nach der EP 3 885 693 A1 im Detail beschreibt.

Tatsächlich verfügt die vorgenannte Wägeeinrichtung beispielhaft über mehrere Wägezellen, mit deren Hilfe die Masse bzw. das Gewicht des betreffenden Gefahrgutes und auch seine Anwesenheit/Abwesenheit ermittelt werden kann. Hieraus lassen sich Positionsangaben für das betreffende Gefahrgut beispielsweise auf einem Schubladenboden ableiten. Selbstverständlich können die betreffenden örtlichen Positionen des zugehörigen Gefahrgutes aber auch rein manuell von dem Bediener eingegeben werden, um auf diese Weise das Gefahrgut nicht nur mit dem zugehörigen Lagerort, sondern auch mit seinem angestammten Platz am oder im Lagerort zu verknüpfen.

Bei der Erfasseinrichtung handelt es sich beispielhaft um einen Sensor, insbesondere Wägesensor, wie dies zuvor bereits beschrieben wurde. Alternativ oder zusätzlich kommt eine Leseeinrichtung für beispielsweise einen QR-Code zum Einsatz, wie dies beispielhaft und im Detail ebenfalls zuvor erläutert wurde. Die Erfasseinrichtung kann den betreffenden Sensor bzw. die Leseeinrichtung aber auch beinhalten. Außerdem können die genannten Einrichtungen auch miteinander verknüpft werden. - Gegenstand der Erfindung ist auch eine Lagerortsverwaltungsvorrichtung, wie sie im Anspruch 13 beschrieben wird, die mit mehreren Lagerorten zur jeweiligen Aufbewahrung einer oder mehrerer Gefahrgüter nach der zuvor beschriebenen Ausgestaltung ausgerüstet ist.

Mithilfe der Anzeigeeinheit kann dabei der jeweilige Lagerort identifiziert und die örtliche Position des Gefahrgutes am zugehörigen Lagerort für einen Bediener angezeigt werden. In diesem Zusammenhang ist es dann selbstverständlich auch möglich, dass der mit der mobilen Steuereinheit ausgerüstete Bediener den Platz des Gefahrgutes am jeweiligen Lagerort respektive seine definitive örtliche Position an einem Display der mobilen Steuereinheit angezeigt bekommt. D. h., die mobile Steuereinheit ist in diesem Fall zur zumindest schematischen Wiedergabe des jeweiligen Lageortes in der Lage und auch dazu, in oder an diesem Lagerort den Platz für das Gefahrgut anzuzeigen. Das kann beispielsweise durch einen Pfeil in der schematischen Wiedergabe des Lageortes, ein Kreuz oder sonst wie auf dem Display der mobilen Steuereinheit geschehen. Wie bereits erläutert, handelt es sich bei dem Lagerort typischerweise um einen Schrank und insbesondere einen Sicherheitsschrank, wie er beispielhaft und nicht einschränkend in der EP 3 396 094 B1 der Anmelderin beschrieben wird.

Im Ergebnis wird ein Verfahren beschrieben, dass es einem Bediener ermöglicht, nicht nur das Gefahrgut und den zugehörigen Lagerort zu identifizieren. Sondern erfindungsgemäß und weitergehend gelingt es erstmals, dem Bediener den angestammten oder auch gewünschten Platz des Gefahrgutes am Lagerort optisch anzuzeigen. Dadurch ist sichergestellt, dass das betreffende Gefahrgut immer an seinen definierten Platz nach einer etwaigen Entnahme zurückkehrt, sodass hierdurch insbesondere Sicherheitsaspekte gegenüber dem Stand der Technik berücksichtigt werden. Beispielsweise kann hierdurch gewährleistet werden, dass an einem bestimmten Lagerort bzw. im Innern eines Sicherheitsschrankes nicht ein übermäßiges Volumen an leicht entzündlichen Flüssigkeiten bevorratet wird, sondern die Menge unter einem vorgegebenen Schwellwert liegt. Darüber hinaus kann auf diese Weise sichergestellt werden, dass in der Steuereinheit erfasste Verbrauchswerte auch tatsächlich realistisch sind und die Realität abbilden, was für eine entsprechende Budgetplanung, für Nachbestellungen etc. relevant ist. Derartige Informationen und Zusatzfunktionen lässt der Stand der Technik bisher nicht zu.

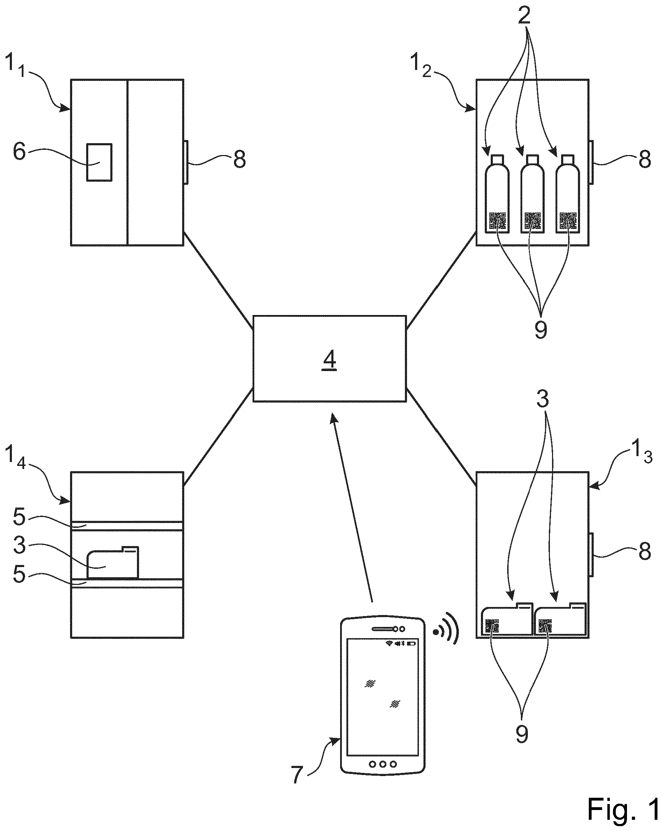

Nachfolgend wird die Erfindung anhand einer lediglich ein Ausführungsbeispiel darstellenden Zeichnung näher erläutert; die einzige Fig. 1 zeigt dabei eine Lagerverwaltungsvorrichtung, die mehrere Lagerorte zur Aufbewahrung einer oder mehrerer Gefahrgüter miteinander kombiniert.

In der Fig. 1 ist eine Vorrichtung zur Behandlung wenigstens eines Gefahrgutes 2, 3 an zumindest einem Lagerort 1 zur Aufbewahrung der betreffenden Gefahrgüter 2, 3 wiedergegeben. Tatsächlich erkennt man anhand der Fig. 1, dass im Beispielfall insgesamt vier verschiedene Lagerorte 1₁,1₂,1₃ und schließlich 1₄ vorgesehen sind.

Bei dem Lagerort 1₁ handelt es sich um einen Sicherheitsschrank, der in seinem Innern zur Aufnahme einer oder mehrerer Batterien geeignet ist. Bei den fraglichen Batterien kann es sich um Lithium-Ionen-Batterien handeln. Am Lagerort 1₂ finden sich nach dem Ausführungsbeispiel Gasflaschen 2 als betreffendes Gefahrgut 2, wohingegen am Lagerort 1₃ und 1₄ jeweils Kanister 3 für Chemikalien als Gefahrgüter aufbewahrt werden. Bei dem betreffenden Lagerort 1 handelt es sich im Ausführungsbeispiel und nicht einschränkend um jeweils einen Sicherheitsschrank 1 bzw. 1₁, 1₂, 1₃, 1₄.

Man erkennt, dass der betreffende Lagerort 1 mit einer typischerweise ortsfesten Steuereinheit 4 kommuniziert. Dazu mag der Lagerort 1 selbst über eine nicht ausdrücklich dargestellte Steuereinheit verfügen. Die Kommunikation zwischen dem betreffenden Lagerort 1 und der Steuereinheit 4 kann dabei drahtgebunden und/oder drahtlos erfolgen. Mithilfe der Steuereinheit 4 kann dabei zumindest das betreffende Gefahrgut 2, 3 und sein zugehöriger Lagerort, d. h. der betreffende Sicherheitsschrank 1₁,1₂,1₃ oder 1₄ identifiziert werden. Außerdem ist wenigstens eine Anzeigeeinheit 5, 7 am Lagerort 1 realisiert.

Bei der Anzeigeeinheit 5 handelt es sich im dargestellten Beispiel nach der Fig. 1 um ein Display 5, welches nach dem Ausführungsbeispiel als elektronisches Etikett an einer Schublade des betreffenden Sicherheitsschrankes 1₄ ausgebildet ist. Die betreffende Schublade dient dabei zur Aufnahme eines oder mehrerer Gefahrgüter 2, 3, nach dem Ausführungsbeispiel zur Aufnahme eines Kanisters 3 für eine bestimmte Chemikalie.

Außerdem ist der betreffende Lagerort 1 noch mit einer Zugangskontrolleinheit 6 ausgerüstet, die im Beispielfall am Sicherheitsschrank 1₁ wiedergegeben ist. Die Zugangskontrolleinheit 6 dient zur Identifizierung eines zutrittswilligen Benutzers. Dazu kann der Benutzer einen ihn identifizierenden Code an der Zugangskontrolleinheit 6 eingeben. Es ist aber auch möglich, dass der fragliche Code mithilfe einer mobilen Steuereinheit 7 an die ortsfeste Steuereinheit übermittelt wird. Bei der mobilen Steuereinheit 7 handelt es sich typischerweise um einen tragbaren Computer, beispielsweise ein Smartphone, ein Tablet etc., welches mit der Steuereinheit 4 und auch den einzelnen Lagerorten 1₁, 1₂, 1₃ und 1₄ kommunizieren kann, und zwar typischerweise drahtlos. Die mobile Steuereinheit 7 fungiert außerdem als weitere Anzeigeeinheit 5, 7. Darüber hinaus definiert die mobile Steuereinheit 7 gegebenenfalls zusammen mit der Zugangskontrolleinheit 6 eine Erfasseinrichtung 6, 7. Die mobile Steuereinheit 7 übernimmt also eine Doppelfunktion als Anzeigeeinheit 5, 7 respektive Erfasseinrichtung 6, 7 oder als jeweiliger Bestandteil hiervon.

Jedenfalls muss sich zunächst ein zutrittswilliger Benutzer gegenüber dem Lagerort 1 bzw. 1₁, 1₂, 1₃ oder 1₄ identifizieren, um überhaupt Zugang zu den dort aufbewahrten Gefahrgütern 2, 3 zu erhalten. Dazu gleicht die Steuereinheit 4 den vom Bediener übermittelten Code mit in der Steuereinheit 4 hinterlegten zulässigen Codes ab, sodass auf diese Weise der zutrittswillige Bediener eindeutig als berechtigt oder eben nicht berechtigt identifiziert wird.

Nachdem der Bediener auf diese Weise Zugang zum betreffenden Lagerort 1 erhalten hat, muss er den betreffenden Lagerort 1 respektive den zugehörigen Sicherheitsschrank 1₁, 1₂, 1₃ oder 1₄ zunächst identifizieren, um anschließend das gewünschte Gefahrgut 2, 3 entnehmen zu können. Zu diesem Zweck verfügt der betreffende Sicherheitsschrank 1₁, 1₂, 1₃ oder 1₄ über ein Identifizierungsmittel 8, welches nach dem Ausführungsbeispiel als an den betreffenden Sicherheitsschrank 1₁, 1₂ 1₃ im Beispielfall angeklebter oder hierauf angebrachter QR-Code ausgebildet ist. Da die mobile Steuereinheit 7 nach dem Ausführungsbeispiel mit einer entsprechenden Leseeinrichtung für den fraglichen QR-Code bzw. das Identifizierungsmittel 8 ausgerüstet ist, kann der zuvor identifizierte Bediener bzw. Benutzer mit dem zugehörigen Lagerort 1 identifiziert und verknüpft werden. Das geschieht in der Regel sowohl in der mobilen Steuereinheit 7 als auch durch Übertragung der entsprechenden Daten an die Steuereinheit 4.

Zur Entnahme des betreffenden Gefahrgutes 2, 3 am oder vom Lagerort 1 ist es nun zusätzlich noch erforderlich, das betreffende Gefahrgut 2, 3 zu identifizieren. Dazu verfügt das betreffende Gefahrgut 2, 3 über ein weiteres Identifizierungsmittel 9, bei dem es sich entsprechend der Darstellung in der Fig. 1 und im einfachsten Fall erneut um einen QR-Code handelt, der in diesem Fall sowohl an die Gasflaschen 2 als auch an die Kanister 3 an - oder auf diese aufgeklebt ist. Selbstständlich kann der QR-Code auch aufgedruckt werden.

Auf diese Weise sind Bediener, Gefahrgut 2, 3 und Lagerort 1₁, 1₂, 1₃ und 1₄ identifiziert worden und können voneinander unterschieden werden. Erfindungsgemäß lässt sich nun zusätzlich noch der Platz bzw. die örtliche Position des betreffenden Gefahrgutes 2, 3 am Lagerort 1 festlegen und darüber hinaus dem Bediener anzeigen. Dazu wird beispielsweise bei der Entnahme des betreffenden Gefahrgutes 2, 3 vom zugehörigen Lagerort 1 so vorgegangen, dass über die Erfasseinrichtung 6, 7 für das Gefahrgut 2, 3 der betreffende Platz des Gefahrgutes 2, 3 identifiziert wird. Bei der fraglichen Erfasseinrichtung 6, 7 kann es sich um einen Sensor und beispielsweise Wägesensor handeln, der Auskunft über die Position des Kanisters 3 ebenso wie der jeweiligen Gasflasche 2 im Innern des zugehörigen Sicherheitsschrankes 1₂, 1₃ oder 1₄ im Beispielfall gibt. D. h., die Information im Sinne von "Bediener - Gefahrgut 2, 3 - Lagerort 1" wird zusätzlich noch mit der weiteren Information "Platz" verknüpft.

Tatsächlich kann der "Platz" des betreffenden Gefahrgutes 2, 3 beispielsweise durch eine zusätzliche Angabe im Sinne von "links" auf der im Rahmen des Sicherheitsschrankes 1₄ dargestellten Schublade oder "rechts" wiedergegeben werden. Eine weitere Differenzierung ist beispielsweise im Sinne von "links vorne", "links hinten", "rechts vorne" und "rechts hinten" möglich und denkbar.

Jedenfalls sind diese sämtlichen Informationen miteinander verknüpft und nach dem Ausführungsbeispiel sowohl in der ortsfesten Steuereinheit 4 als auch in der mobilen Steuereinheit 7 vorhanden und können hier abgerufen werden. In diesem Fall fungiert die mobile Steuereinheit 7 mit ihrem in der Fig. 1 angedeuteten Bildschirm als Anzeigeeinheit 5, 7, um die örtliche Position des Gefahrgutes 2, 3 am zugehörigen Lagerort 1 für einen Bediener anzuzeigen. In einer weiteren und gleichsam doppelten Funktion stellt die mobile Steuereinheit 7 zusätzlich auch einen Bestandteil der Erfasseinrichtung 6, 7 dar, dient beispielsweise zur Identifizierung des Benutzers an der Zugangskontrolleinheit 6 oder dazu, über das Identifizierungsmittel 9 das betreffende Gefahrgut 2, 3 mit Hilfe der zugehörigen Leseeinrichtung zu identifizieren.

Hat der Bediener beispielsweise den "linken" Kanister 3 aus dem Sicherheitsschrank 1₃ als Lagerort 1 entnommen, so wird dem Bediener auf seinem Display der mobilen Steuereinheit 7 bei der Rückgabe des betreffenden Kanisters 3 angezeigt, dass dieser nicht nur in dem zugehörigen Sicherheitsschrank 1₃ als Lagerort 1 unterzubringen ist, sondern auch "links" auf einem dortigen Boden.

Alternativ oder zusätzlich können aber auch die bereits angesprochenen Displays 5 bzw. elektronischen Etiketten an den zugehörigen Schubladen beim Sicherheitsschrank 1₄ als Anzeigeeinheit fungieren, um die örtliche Position des Gefahrgutes 2, 3 am Lagerort 1 für den Bediener anzuzeigen. So ist es denkbar, dass über das betreffende Display 5 bzw. das jeweilige elektronische Etikett ein Pfeil am elektronischen Etikett an der unteren Schublade erscheint, sobald der dort in der Fig. 1 wiedergegebene Kanister 3 entnommen und wieder zurückgestellt werden soll. Bei dem betreffenden Sicherheitsschrank 1₄ erkennt man auch, dass mehrere Displays 5 im Beispielfall verteilt über den zugehörigen Lagerort 1 in Gestalt des Sicherheitsschrankes 1₄ vorgesehen sein können. Die Anzeige der jeweils vorhandenen Gefahrgüter 2, 3 und/oder ein Abbild des Lageortes 1 lässt sich dabei auf dem betreffenden Display 5 wiedergeben, insbesondere auf dem Display der mobilen Steuereinheit 7. Hier ist es denkbar, dass das fragliche Display der mobilen Steuereinheit 7 schematisiert das Innere des Sicherheitsschrankes 1₄ im Beispielfall anzeigt und in dieser schematischen Darstellung die Position des Kanisters 3 auf der unteren Schublade durch beispielsweise einen Pfeil, ein Kreuz etc. dem Bediener kenntlich gemacht wird. D. h., das fragliche Display ist in diesem Fall mit einer zusätzlichen Anzeigefunktion zur örtlichen Positionsangabe des Gefahrgutes 2, 3 ausgerüstet. Ähnliches ist natürlich auch bei den Displays 5 im Sicherheitsschrank 1₄ möglich.

Dabei kann die zusätzliche Anzeigefunktion auch als beispielsweise Hintergrundfarbe abgebildet werden. So ist es denkbar, dass die untere Schublade im Sicherheitsschrank 1₄ mit einer grünen Hintergrundfarbe ausgerüstet wird, um den Bediener darauf hinzuweisen, dass die betreffende Schublade zur Aufnahme des zuvor entnommenen Gefahrgutes 3 bzw. Kanisters 3 vorgesehen ist.

In diesem Zusammenhang nicht ausdrücklich dargestellt ist die weitergehende Möglichkeit, dass die Anzeigeeinheit 5, 7 zumindest ein Leuchtmittel aufweist oder als solches ausgebildet ist. In diesem Fall kann im Innern des betreffenden Sicherheitsschrankes 1₄ beispielsweise mithilfe einer LED die Position des Kanisters 3 für seine Rückgabe auf dem Boden der unteren Schublade angeleuchtet werden. Eine entsprechende Positionsangabe lässt sich auch auf dem Display der mobilen Steuereinheit 7 wiedergeben, wie dies zuvor bereits erläutert wurde.

Ebenfalls möglich ist es, dass die mobile Steuereinheit 7 zusätzlich Ortsinformationen auswertet und den Bediener zur örtlichen Position des Gefahrgutes 2, 3 am Lagerort 1 führt. In diesem Fall werden beispielsweise ohnehin vorhandene Ortsinformationen im Innern der mobilen Steuereinheit 7 ausgewertet und genutzt. Bei diesen Ortsinformationen kann es sich um GPS-Daten handeln, oder solche, die beispielsweise durch die Triangulation von wenigstens drei Sendern zur Definition des Lageortes 1 gewonnen worden sind.

Anhand dieser Ortsinformationen kann dann mithilfe der mobilen Steuereinheit 7 eine "Routenplanung" vorgenommen werden, welche dem mit der mobilen Steuereinheit 7 ausgerüsteten Bediener beispielsweise den "kürzesten Weg" zum angestammten Platz des zuvor entnommenen und wieder zurückzubringenden Gefahrgutes 2, 3 anzeigt. Das ist im Detail nicht dargestellt. Im Rahmen der Fig. 1 wird insgesamt eine Lagerverwaltungsvorrichtung wiedergegeben, die mit mehreren Lagerorten 1 in Gestalt der einzelnen Sicherheitsschränke 1₁, 1₂, 1₃ und 1₄ zur jeweiligen Aufbewahrung einer oder mehrerer Gefahrgüter 2, 3 ausgerüstet ist. Dabei lässt sich der jeweilige Lagerort 1 bzw. der zugehörige Sicherheitsschrank 1₁, 1₂, 1₃ und 1₄ identifizieren. Gleiches gilt für die örtliche Position des zugehörigen Gefahrgutes 2, 3 am betreffenden Lagerort 1, die für einen Bediener wie beschrieben angezeigt wird.

Wie bereits erläutert, dient der Sicherheitsschrank 1₁ zur Aufnahme und Lagerung einer oder mehrerer Batterien und insbesondere Lithium-Ionen-Batterien. Der fragliche Sicherheitsschrank 1₁ kann dabei beispielhaft so aufgebaut sein, wie dies die EP 3 396 094 B1 der Anmelderin beschreibt. In diesem Kontext ist es denkbar, dass die Anzeigeeinheit 5, 7 nicht nur die betreffenden Gefahrgüter 2, 3 respektive ein Abbild des zugehörigen Lageortes 1 oder auch eine Positionsangabe des betreffenden Gefahrgutes 2, 3 wiedergibt.

Sondern mithilfe der Anzeigeeinheit 5, 7 kann ganz generell - gegebenenfalls in Verbindung mit der Erfasseinrichtung 6, 7 - auch der Füllstand des Gefahrgutes 2, 3 in Verbindung mit den Gasflaschen 2 oder dem Kanister 3 angegeben werden.

Da im Rahmen des Ausführungsbeispiels die an dieser Stelle eingesetzte mobile Steuereinheit 7 die bereits beschriebene Doppelfunktion als Anzeigeeinheit 5, 7 respektive Erfasseinrichtung 6, 7 oder als jeweiliger Bestandteil hiervon ausfüllt, kann im Beispielfall die mobile Steuereinheit 7 und folglich auch die Anzeigeeinheit 5, 7 beim Sicherheitsschrank 1₁ auch dazu benutzt werden, z.B. Quarantänezeiten der im Innern befindlichen Batterien wiederzugeben. Bei diesen Quarantänezeiten handelt es sich beispielhaft um Zeiten, die typischerweise im Anschluss an einen Unfall seitens eines Lithium-Ionen-Akkus bei einem Elektroauto oder auch einem Fahrrad berücksichtigt werden müssen. Solche Quarantänezeiten sind einzuhalten, um eine etwaige Selbstentzündung der betreffenden Batterie im Anschluss an das beispielhafte Unfallgeschehen überwachen und negative Auswirkungen beherrschen zu können. Dazu wird die betreffende Batterie im Beispielfall in dem Sicherheitsschrank 1₁ untergebracht.

Neben solchen Quarantänezeiten kann über die Anzeigeeinheit 5, 7 bzw. die mobile Steuereinheit 7 zusätzlich noch angegeben werden, wann die Einlagerung der Batterie erfolgt ist und durch welche Bedienperson. Im Anschluss an den Zeitpunkt der Einlagerung kann dann unter Berücksichtigung der Quarantänezeit ebenfalls mithilfe der Anzeigeeinheit 5, 7 bzw. an der mobilen Steuereinheit 7 ausgegeben werden, wann die Quarantänezeit beendet und folglich die Batterie aus dem Sicherheitsschrank 1₁ wieder herausgenommen werden kann.

Schließlich lässt sich über die Anzeigeeinheit 5, 7 visuell ausgeben, welcher Bediener die fragliche Batterie aus dem Sicherheitsschrank 1₁ entnehmen kann. Dazu mag eine zusätzliche Berechtigungsprüfung an der Zugangskontrolleinheit 6 ergänzend zur Identifizierung des zutrittswilligen Bedieners erfolgen. Diese sämtlichen Vorgaben und Daten werden dabei von der Steuereinheit 4 überwacht bzw. mit dieser ausgetauscht, stehen folglich in der Steuereinheit 4 zur Verfügung. Da die Steuereinheit 4 grundsätzlich auch mit einem weltweiten Rechnernetzwerk (Internet) drahtlos oder drahtgebunden gekoppelt werden kann, lassen sich die fraglichen Informationen praktisch weltweit und von überall her abfragen und gegebenenfalls steuern.

## Patentansprüche

1. Verwendung einer Lagerortverwaltungsvorrichtung mit mehreren Lagerorten (1) zur jeweiligen Aufbewahrung einer oder mehrerer Gefahrgüter (2, 3), wobei
der jeweilige Lagerort (1) als Sicherheitsschrank ausgebildet ist, wobei ferner eine stationäre Steuereinheit (4) zur Identifizierung des Gefahrgutes (2, 3) und seines zugehörigen Lageortes (1) vorgesehen ist, indem
der betreffende Lagerort (1) mit der ortsfesten Steuereinheit (4) kommuniziert und die Identifizierung des Platzes des Gefahrgutes (2, 3) am Lagerort (1) mithilfe einer Wägeeinrichtung als Erfasseinrichtung (6, 7) vorgenommen wird, wobei weiter
mithilfe wenigstens einer Anzeigeeinheit (5, 7) am jeweiligen Lagerort (1) der jeweilige Lagerort (1) und die örtliche Position des Gefahrgutes (2, 3) am Lagerort (1) für einen Bediener angezeigt wird und dazu
die Anzeigeeinheit (5, 7) als wenigstens ein Display (5) ausgebildet ist oder ein solches aufweist sowie das jeweilige Display (5) als elektronisches Etikett zur Anzeige der jeweils vorhandenen Gefahrgüter (2, 3) und als Abbild des Lageortes (1) ausgebildet ist, und wobei
zusätzlich zur stationären Steuereinheit (4) wenigstens eine mobile Steuereinheit (7) zur Mitnahme seitens eines Bedieners vorgesehen ist, welche mit der ortsfesten Steuereinheit (4) Daten austauscht, um zumindest das Gefahrgut (2, 3) und seinen zugehörigen Lagerort (1) zu identifizieren und als Anzeigeeinheit (7) fungiert sowie Ortsinformationen auswertet und den Bediener zur örtlichen Position des Gefahrgutes (2, 3) am Lagerort (1) führt, indem
die mobile Steuereinheit (7) anhand von GPS-Daten seine und damit die Position des Bedieners auswerten und einen Routenvorschlag dem Bediener unterbreiten kann, damit dieser das betreffende Gefahrgut (2, 3) zielgenau an seinem angestammten Platz am zugehörigen Lagerort (1) unterbringen kann.

2. Verwendung nach Anspruch 1, **dadurch gekennzeichnet, dass** mehrere Displays (5) verteilt über den Lagerort (1) vorgesehen sind.

3. Verwendung nach Anspruch 1 oder 2, **dadurch gekennzeichnet, dass** das jeweilige Display (5) eine zusätzliche Anzeigefunktion zur örtlichen Positionsangabe des Gefahrgut (2, 3) aufweist.

4. Verwendung nach Anspruch 3, **dadurch gekennzeichnet, dass** die zusätzliche Anzeigefunktion als beispielsweise Hintergrundfarbe, Zusatzfeld etc. im Display (5) ausgebildet ist.

5. Verwendung nach einem der Ansprüche 1 bis 4, **dadurch gekennzeichnet, dass** die Anzeigeeinheit (5, 7) zumindest ein Leuchtmittel aufweist oder als solches ausgebildet ist.

6. Verwendung nach Anspruch 5, **dadurch gekennzeichnet, dass** das Leuchtmittel zur Beleuchtung des Gefahrgutes (2, 3) an der örtlichen Position am Lagerort (1) eingerichtet ist.

## Claims

1. Use of a storage location management device with multiple storage locations (1) for the purpose of storing one or more hazardous materials (2, 3) in each case,
wherein the respective storage location (1) is designed as a safety cabinet, wherein further a stationary control unit (4) is provided for identifying the hazardous material (2, 3) and its associated storage location (1) in that
the respective storage location (1) communicates with the stationary control unit (4), and identifying the place of the hazardous material (2, 3) at the storage location (1) is carried out with the aid of a weighing device as a recording device (6, 7), wherein, furthermore,
the respective storage location (1) and the local position of the hazardous material (2, 3) at the storage location (1) are displayed for an operator by means of at least one display unit (5, 7) at the respective storage location (1) and for this purpose,
the display unit (5, 7) is designed as at least one display (5) or has such a display, and the respective display (5) is designed as an electronic label for displaying the respective hazardous materials (2, 3) present and as an image of the storage location (1), and wherein
in addition to the stationary control unit (4), at least one mobile control unit (7) is provided which can be taken along by an operator and which exchanges data with the stationary control unit (4) in order to at least identify the hazardous material (2, 3) and its associated storage location (1) and which functions as a display unit (7) and also evaluates location information and guides the operator to the local position of the hazardous material (2, 3) at the storage location (1), in that
the mobile control unit (7) can evaluate its position and thus the position of the operator based on GPS data and provide the operator with a route suggestion so that the operator can accurately accommodate the relevant hazardous material (2, 3) in its proper place at the associated storage location (1).

2. The use according to claim 1, **characterized in that** multiple displays (5) are provided distributed over the storage location (1).

3. The use according to claim 1 or 2, **characterized in that** the respective display (5) has an additional display function for indicating the local position of the hazardous material (2, 3).

4. The use according to claim 3, **characterized in that** the additional display function is designed, for example, as a background color, additional field, etc. in the display (5).

5. The use according to any one of claims 1 to 4, **characterized in that** the display unit (5, 7) has at least one illuminant or is designed as such.

6. The use according to claim 5, **characterized in that** the illuminant is configured to illuminate the hazardous material (2, 3) at the local position at the storage location (1).

## Revendications

1. Utilisation d'un dispositif de gestion de lieu d'entreposage avec plusieurs lieux d'entreposage (1) pour la conservation correspondante d'une ou de plusieurs marchandises dangereuses (2, 3), sachant que
le lieu d'entreposage respectif (1) est constitué sous la forme d'une armoire de sécurité, sachant en plus qu'une unité de commande stationnaire (4) est prévue pour l'identification de la marchandise dangereuse (2, 3) et de son lieu d'entreposage correspondant (1),
le lieu d'entreposage concerné (1) communiquant avec l'unité de commande fixe (4) et l'identification de l'emplacement de la marchandise dangereuse (2, 3) sur le lieu d'entreposage (1) étant effectuée à l'aide d'un système de pesée sous la forme d'un système de saisie (6, 7), sachant en plus
que
le lieu d'entreposage respectif (1) et la position locale de la marchandise dangereuse (2, 3) sont affichés sur le lieu d'entreposage (1) pour un utilisateur à l'aide d'au moins une unité d'affichage (5, 7) sur le lieu d'entreposage respectif (1) et à cet effet
l'unité d'affichage (5, 7) est constituée sous la forme d'au moins un affichage (5) ou comporte un élément de e type et l'affichage (5) respectif est constitué sous la forme d'une étiquette électronique pour l'affichage des marchandises dangereuses (2, 3) respectivement présentes et sous la forme d'une reproduction du lieu d'entreposage (1), et sachant qu'
au moins une unité de commande mobile (7) à emporter par un utilisateur est prévue en plus de l'unité de commande stationnaire (4), laquelle échange des données avec l'unité de commande fixe (4) pour identifier au moins la marchandise dangereuse (2, 3) et son lieu d'entreposage correspondant (1) et fonctionne comme unité d'affichage (7) et évalue des informations locales et dirige l'utilisateur vers la position locale de la marchandise dangereuse (2, 3) sur le lieu d'entreposage (1),
l'unité de commande mobile (7) évaluant à l'aide de données de système de positionnement par satellite (GPS) sa position et de ce fait la position de l'utilisateur et pouvant soumettre à l'utilisateur une proposition d'itinéraire afin que celui-ci puisse mettre de façon précise la marchandise dangereuse concernée (2, 3) à son emplacement habituel sur le lieu d'entreposage correspondant (1).

2. Utilisation selon la revendication 1, **caractérisée en ce que** plusieurs affichages (5) sont prévus répartis sur le lieu d'entreposage (1).

3. Utilisation selon la revendication 1 ou 2, **caractérisée en ce que** l'affichage respectif (5) comporte une fonction d'affichage supplémentaire pour l'indication de position locale de la marchandise dangereuse (2, 3).

4. Utilisation selon la revendication 3, **caractérisée en ce que** la fonction d'affichage supplémentaire est constituée dans l'affichage (5) sous la forme, par exemple, d'une couleur d'arrière-plan, d'un champ supplémentaire etc.

5. Utilisation selon l'une quelconque des revendications 1 à 4, **caractérisée en ce que** l'unité d'affichage (5,7) comporte au moins un moyen d'éclairage ou est constituée comme tel.

6. Utilisation selon la revendication 5, **caractérisée en ce que** le moyen d'éclairage pour éclairer la marchandise dangereuse (2, 3) est agencé à la position locale sur le lieu d'entreposage (1).
